# EUROPÄISCHE PATENTSCHRIFT

(11) **EP 2 167 268 B1**
(45) Veröffentlichungstag und Bekanntmachung des Hinweises auf die Patenterteilung: **16.03.2011**
(21) Anmeldenummer: 08870154.5
(22) Anmeldetag: 22.12.2008
(51) Int. Cl.: B23K 7/00, B23K 7/10, B23K 37/02, B23Q 1/01, B22D 11/126

(54) **STRANGBRENNSCHNEIDMASCHINE MIT EINEM ORTFEST DREHBAREN KRANTURM**
TORCH CUTTING UNIT HAVING STATIONARY ROTATABLE CRANE TOWER
MACHINE D'OXYCOUPAGE DE BARRES AVEC UN PYLÔNE DE GRUE ROTATIF À POSTE FIXE

(30) Priorität: 09.01.2008 DE 102008003717
(43) Veröffentlichungstag der Anmeldung: 31.03.2010
(73) Patentinhaber: Aute AG Gesellschaft für autogene Technik, 2068 Hauterive (CH)
(72) Erfinder: LOTZ, Horst, K., 65207 Hofheim-Wallau (DE)
(74) Vertreter: Aue, Hans-Peter
(86) Internationale Anmeldenummer: PCT/EP2008/011044
(87) Internationale Veröffentlichungsnummer: WO 2009/086913

(56) Entgegenhaltungen:
- EP-A- 0 516 199
- DE-A1-102006 020 415
- DE-C- 906 533
- US-A- 2 511 591

## Beschreibung

Die Erfindung bezieht sich auf eine Strangbrennschneidmaschine zum Brennschneiden von gegossenen kalten und heißen Knüppeln, Blöcken und Brammen aus Stahl in und nach Stahlstranggießanlagen gemäß dem Oberbegriff des Anspruchs 1 (siehe, z.B., DE 10 2006 020415 A). Endlos vergossene Stränge aus Stahl in Stranggießanlagen müssen zur Weiterverarbeitung in transportable und den Endprodukten entsprechende Längen unterteilt werden. Diese überwiegend heißen Knüppel, Blöcke oder Brammen werden üblicherweise durch Sauerstoffschneidbrenner an einer Strangbrennschneidmaschine abgetrennt. Bei einer solchen Strangbrennschneidmaschine verwandelt ein Schneidsauerstoffstrahl den auf Zündtemperatur gebrachten Stahl in eine abfließende Oxydschlacke und erzeugt so eine Fuge, die bei Bewegung in einen Schnitt auswächst.

Bei den meisten bekannten Ausführungen von Strangbrennschneidmaschinen handelt es sich um robuste, überwiegend portalartige, mit Wasserplatten gegen die starke vom Strang abgestrahlte Hitze geschützte, auf zu beiden Seiten des Stranges angeordneten Schienen verfahrende Maschinengehäuse aus zusammengeschweißten schweren Profilen und Stahlplatten. Eine ebenso erzeugte Brennerwagenlaufbahn an diesem Portal trägt die im Wesentlichen ungeschützten Brennerwagen mit den Schneidbrennern und die versorgenden Schläuche und Kabel, die in Schlauch- und Kabelschleppketten geführt werden.

In der nicht vorveröffentlichten DE 10 2006 020 415.8 wird eine Strangbrennschneidmaschine beschrieben, die im Wesentlichen aus einem am Werkstück, d.h. dem Gießstrang, entlang verfahrbaren Turmwagen mit Fahrantrieb, Gegengewicht, Hubantrieb, Elektrostation, Gasstation, Höhenwagen und einem mit Scharnieren zum Ausschwenken eines mit einem Schwenkantrieb drehbar gelagerten, rahmenartigen Auslegers besteht, auf dem ein oder zwei in rundum Wasser durchflossene Kühlmäntel eingeschobene Brennerwagen mit Schneidbrenner quer zum Werkstück verfahrbar sind.

Bei notwendigen Reparatur- und Wartungsarbeiten an der Strangbrennschneidanlage kann es infolge von Betriebsstörungen aller Art zum Stillstand der Anlage kommen, was mit enormen Kosten- und Zeitaufwand verbunden ist. Beim Reparatur- und Wartungspersonal kann es wegen der unmittelbaren Arbeitsnähe am heißen Strang und der damit verbundenen Hitzeabstrahlung zu mehr oder weniger starken Verletzungen führen. Um dies zu vermeiden und Wartungsarbeiten durchführen zu können kann der Ausleger der Strangbrennschneidmaschine in einer horizontalen Ebene aus dem Rollengang des Gießstranges herausgeschwenkt werden, so dass der Ausleger parallel zur Gießstrangrichtung ausgerichtet ist.

Des Weiteren wird gezeigt, dass der mit Rädern und einem Fahrantrieb versehene Turmwagen auf relativ langen Schienen als Rollenbahn verfahren wird, die auf einem entsprechenden Fundament befestigt sind. Ein solches mit Schienen versehenes Fundament ist technisch sehr aufwändig und kostenintensiv, da dieses extrem viele Kräfte und Drücke aufnehmen muss.

Aus der DE 36 07 027 A1 ist eine Vorrichtung zum Wärmeschneiden von Metallschrott und -abfall bekannt, die eine Säule aufweist, an der ein Schlitten montiert und an dem wiederum ein Ausleger befestigt ist, an dem ein Brenner und eine Schwenkvorrichtung zum Schwenken des Auslegers angebracht sind. Der Schlitten mit dem Ausleger ist an der Säule an einem nachgiebigen Seilzug aufgehängt. Das eine Ende des Seilzugs ist mit einem Mittel zur Bewegung des Schlittens an der Säule verbunden, und das andere Ende ist über ein Ablenkungsglied am Ausleger derart befestigt, dass am Ausleger ständig ein Drehmoment relativ zu der Schwenkachse des Auslegers angelegt ist. Weiterhin ist gezeigt, dass Säule mit Rädern auf einem Schienenstrang quer zur Schneidrichtung des Brenners verfahrbar ist. Auch hier tritt der Nachteil des sehr aufwändigen und kostenintensiven Schienenstranges mit entsprechendem Fundament auf. Darüber hinaus ist ein quer zum Werkzeug gerichtetes Schneiden nur durch Verfahren der Säule auf den Schienen möglich.

Weiterhin sind aus der US 2,511,591 A und der DE 906 533 C jeweils eine Brennscheidmaschine mit einem Kranturm bekannt, der ortsfest neben dem Gießstrang angeordnet ist.

Es ist Aufgabe der Erfindung, eine Strangbrennschneidmaschine der eingangs genannten Art zu schaffen, durch die aufwändige und kostenintensive Verfahreinrichtungen eingespart werden, sodass ein Synchronlauf der Brenner quer zur Gießstrangrichtung beim Schneidbrennen gewährleistet ist.

Eine Strangbrennschneidmaschine gemäß der Erfindung ist im Anspruch 1 definiert.

Zunächst ermöglicht der ortsfeste Kranturm neben dem Gießstrang das Eliminieren von mit Schienen versehenen Fundamenten, die technisch sehr aufwändig und kostenintensiv sind und auf denen die gesamte Strangbrennschneidmaschine mit ihrem vollen Gewicht und allen Einrichtungen und Zusatzaggregaten verfahren werden müsste. Dieses mit Schienen versehene Fundament macht einen Großteil der Kosten der Stahlstranggießanlagen aus, so dass ein großes Einsparpotential an Kosten erreicht wird.

Der am Kranturm angeordnete Gelenkarm verschwenkt mit einem entsprechenden elektromotorischen, hydraulischen oder pneumatischen Antrieb in einer horizontalen Ebene in einem Winkelbereich von mindestens 90° über den Gießstrang derart, dass die Brennerwagen beim Schneidbrennen quer zur Gießstrangrichtung die gesamte Breite des Gießstranges überfahren können.

Entlang auf dem Gelenkarm bzw. dem Ausleger ist ein Hubwagen verfahrbar, der ein Drehlager aufweist, welches den Gelenkarm mit dem Ausleger horizontal drehbar verbindet. Der Drehpunkt des Gelenkarms und des Auslegers befindet sich somit auf dem Hubwagen. Dadurch bilden der Gelenkarm und der Ausleger ein Gelenkpaar. Durch NC-(Numerical Control)-gesteuertes Verfahren des Hubwagens während des Brennschneidvorganges wird dabei gewährleistet, dass der Ausleger und somit die Brennerwagen mit den Schneidbrennern immer einen 90°-Winkel zur Gießstrangrichtung einnehmen, der für einen rechtwinkligen Schnitt des Gießstranges erforderlich ist.

Darüber hinaus dient der Gelenkarm gleichzeitig zur Aufnahme einer Sammelleitung für die Betriebsmittel- und gegebenenfalls Kühlwasserzufuhr sowie die Versorgungsleitungen und Steuerkabel für die Schneidmedien, wie Sauerstoff, Brenngas und Schneidgas, sowie elektrische Leitungen und gegebenenfalls Kühlwasser für insbesondere den Ausleger und/oder die Brennerwagen.

Ein weiterer Vorteil der erfindungsgemäßen Strangbrennschneidmaschine besteht darin, dass kein konstruktiv aufwändiger Maschinenturm oder Turmwagen notwendig sind, der bei einer entlang des Gießstranges verfahrbaren Strangbrennschneidmaschine Transportelemente, wie Räder und Fahrantriebe aufweisen müssten, um auf einem Schienenfundament verfahren zu werden.

Weitere Ausgestaltungen der Erfindung ergeben sich aus den Unteransprüchen.

Dem gemäß kann vorgesehen sein, dass der Ausleger zu Reparatur- und Wartungszwecken nach außerhalb des Gießstranges verschwenkbar ist. Das bedeutet, dass der verschwenkbare Winkelbereich des Gelenkarms so groß gestaltet wird, dass der Gelenkarm zusammen mit dem Ausleger ausschwenkbar ist, so dass diese beispielsweise parallel zur Gießstrangrichtung platziert werden können. Damit befinden sich der Gelenkarm und der Ausleger außerhalb des Hitze- und Gefahrenbereich des Gießstranges, so dass Wartungs- und Reparaturarbeiten einfacher durchgeführt werden können. Die Ausführung als ausschwenkbarer Ausleger ermöglicht eine schnelle und sichere Wartung, entsprechende Reparaturen und den Austausch aller an und auf dem Ausleger befindlichen Teile wie Düsen, Brenner, Schläuche, Brennerwagen, Brennerwagenteile und Sammelleitungen.

Nach einer weiteren Ausgestaltung der Strangbrennschneidmaschine ist der Hubwagen vorzugsweise auf Rädern auf der Oberseite des Gelenkarms bzw. des Auslegers verfahrbar. Vorzugsweise kann der Hubwagen Räder/Radpaare oben und gegebenenfalls unten haben und kann z.B. auf den obersten waagerechten Rohren des rohrgerüstartigen Auslegers oder des Gelenkarms abrollen.

Weiterhin weist der Kranturm eine vertikale Säule auf, an welcher der Gelenkarm drehbeweglich angelenkt und die Säule mit Seil, Kette, Zahnstange, Hubkolbenzylinder oder dergleichen zum Heben und Senken des Auslegers höhenverstellbar ausgebildet ist. Dabei sind alle Gelenkpunkte möglichst stabil und spielfrei ausgeführt, um spätestens beim Aufsetzen des Auslegers ein Verwinden zu vermeiden.

Ferner kann die Säule des Kranturms drehbar ausgebildet ist. Dadurch wird beispielsweise ein Verschwenken des Auslegers zur Wartungs- und Reparaturzwecken nach außerhalb des Gießstranges unterstützt.

Des Weiteren sind die zum Brennschneiden erforderlichen Elemente, wie Schneidbrenner, motorischer Schneidantrieb mit Getriebe und Elektromotor, Halterungen für die Sammelleitung, sowie Gassteuerungsteile, wie Ventile, Messgeräte sowie Kantentaster und Wegbegrenzungsschalter am Ausleger angeordnet.

Darüber hinaus ist der Ausleger mit einer Wärmeisolierung und Aufsetzkufen für den Gießstrang versehen. Bevorzugt besteht der Ausleger zur Wärmerisolierung aus einer Kühlwasser durchflossenen, rahmenartigen Fachwerkkonstruktion. Gegenüber anderen bekannten Strangbrennschneidmaschinen ist der Ausleger in einer offenen Rohrkonstruktion ausgeführt, die robust und wartungsgünstig ist. Die Ausführung als wasserdurchflossene Rohrkonstruktion der Strangbrennschneidmaschine verhindert eine unnötige Erhitzung oder gar Überhitzung tragender Bauteile und verringert einen noch notwendigen Hitzeschutz für die Brennerwagen und die Medien- und Energie-Sammelleitungen und damit die Gesamtmenge des benötigten Kühlwassers.

Weiterhin sind am Kranturm im Wesentlichen ein Drehantrieb, Hubantrieb, Elektrostation, Gasstation und gegebenenfalls weitere Steuermittel angeordnet.

Nach einer weiteren Ausgestaltung des Gelenkarms der Strangbrennschneidmaschine besteht dieser aus zwei halben ineinander gelegten und verschweißten Rohren, deren mondsichelförmiger Hohlraum als Kühlwasserraum und der darüber liegende halbkreisförmige Freiraum zur Aufnahme der Sammelleitung dienen. Die Sammelleitung ist über die Gelenkachsen mit einer Überlänge verlegt, wobei ein störungsfreies Abknicken des Gelenkarms und des Auslegers ermöglicht wird. Von besonderem Vorteil ist der Verlauf der Sammelleitung im halbkreisförmigen Freiraum oberhalb des Kühlwasseraumes. Dadurch ist ein separates Kühlen der Sammelleitung, welches technisch und kostenmäßig sehr aufwändig wäre, nicht mehr notwendig. Darüber hinaus können separate Führungswalzen und -gestänge zur Führung der Sammelleitung entfallen.

Die NC-(Numerical Control)-Steuerung erfolgt in der Weise, dass ein Datensatz von Steuerungsbefehlen von einem Datenträger gelesen, in Arbeits- bzw. Bewegungsabläufe umgesetzt und nacheinander abgearbeitet wird.

Der der Erfindung zu Grunde liegende Gedanke wird in der nachfolgenden Beschreibung anhand von Ausführungsbeispielen, die in den Zeichnungen dargestellt sind, näher beschrieben. Es zeigen:
- Fig. 1: eine Seitenansicht der erfindungsgemäßen Strang- brennschneidmaschine in einer ersten Ausführungs- form,
- Fig. 2: eine Draufsicht der Strangbrennschneidmaschine ge- mäß Fig. 1,
- Fig. 3: eine Draufsicht der Strangbrennschneidmaschine in einer zweiten Ausführungsform, und
- Fig. 4: eine Querschnittsansicht des Gelenkarms entlang der Linie A-A gemäß Fig. 3.

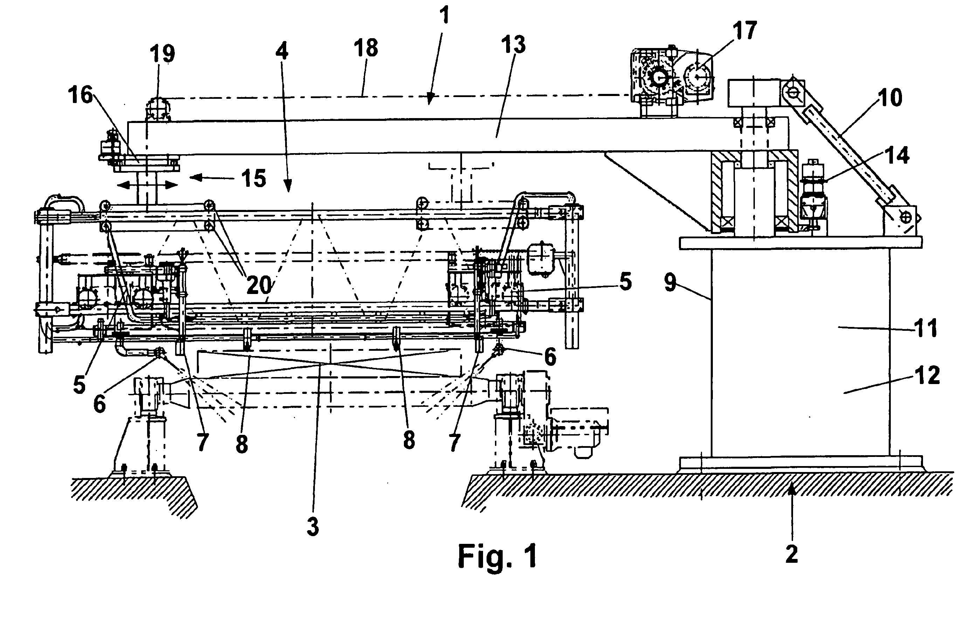

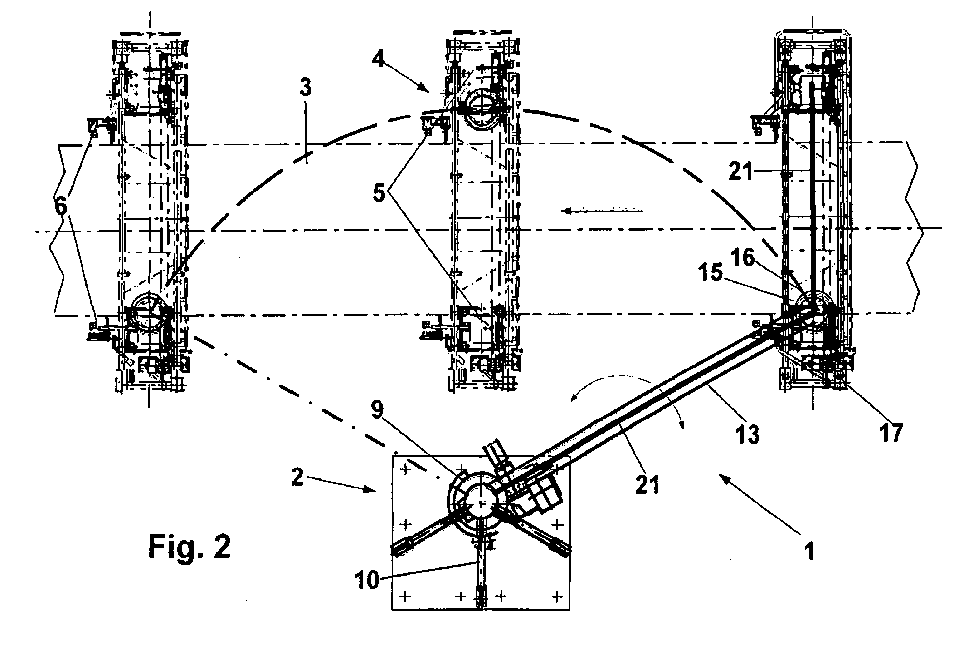

Die Strangbrennschneidmaschine 1 gemäß den Fig. 1 und 2 besteht in ihren Hauptbaugruppen aus einem Kranturm 2 und einem quer zur Längsrichtung des Gießstranges 3 ausgerichteten Ausleger 4, in dem ein oder zwei Brennerwagen 5 mit Schneidbrennern 6 quer zum Gießstrang 3 auf Laufbahnen verfahrbar sind. Weiterhin sind am Ausleger 4 zwei zueinander beabstandete und in Bezug zu den Kanten des Gießstranges 3 einstellbare Kantentaster 7 sowie zwei zueinander beabstandete Aufsetzkufen 8 zum Aufsetzen auf den Gießstrang 3 angebracht. Der Ausleger 4 besteht zur Wärmerisolierung aus einer Kühlwasser durchflossenen, offenen rahmenartigen Fachwerkkonstruktion.

Der Kranturm 2 ist ortsfest neben dem Gießstrang 3 angeordnet. Weiterhin weist der Kranturm 2 eine vertikale und gegebenenfalls drehbare Säule 9 auf, die mit einem Hubkolbenzylinder 10 in der Höhe verstellbar ist, um den Ausleger 4 Heben und Senken zu können. Am Kranturm 2 sind zumindest eine Elektrostation 11 und eine Gasstation 12 untergebracht.

Zwischen dem Kranturm 2 und dem Ausleger 4 ist ein diese verbindender, in einem bestimmten Winkelbereich horizontal verschwenkbarer Gelenkarm 13 drehbeweglich eingesetzt, so dass an diesem horizontal drehbar der Ausleger 4 angelenkt ist. Mittels eines Drehantriebs 14 wird der Gelenkarm 13 um den bestimmten Winkelbereich verschwenkt. Während des Brennschneidens wird dabei der Ausleger 4 NC-gesteuert stets im rechten Winkel zur Längsrichtung des Gießstrangs 2 ausgerichtet.

Zwischen dem Ausleger 4 und dem Gelenkarm 13 ist ein Hubwagen 15 angebracht, der mit einem Drehlager 16 versehen ist, welches über einen Hubwagenantrieb 17 und beispielsweise einer Zahnstange 18 und ein Zahnrad 19 verdreht werden kann, um den rechten Winkel des Auslegers 4 zur Längsrichtung des Gießstranges 23 während des Brennschneidens zu gewährleisten. Der Hubwagen 15 ist mit Paaren von Rädern 20 versehen, die am oberen Rahmen des Auslegers 4 entlang rollen, so dass der Hubwagen 15 längsbeweglich am Gelenkarm 13 und am Ausleger 4 verfahren werden kann. Der längsbewegliche Hubwagen 15 mit dem drehbeweglichen Drehlager 16 ist derart mit dem Ausleger 4 verbunden, dass dieser während des Brennschneidens NC-gesteuert stets im rechten Winkel zur Längsrichtung des Gießstranges 3 ausgerichtet ist.

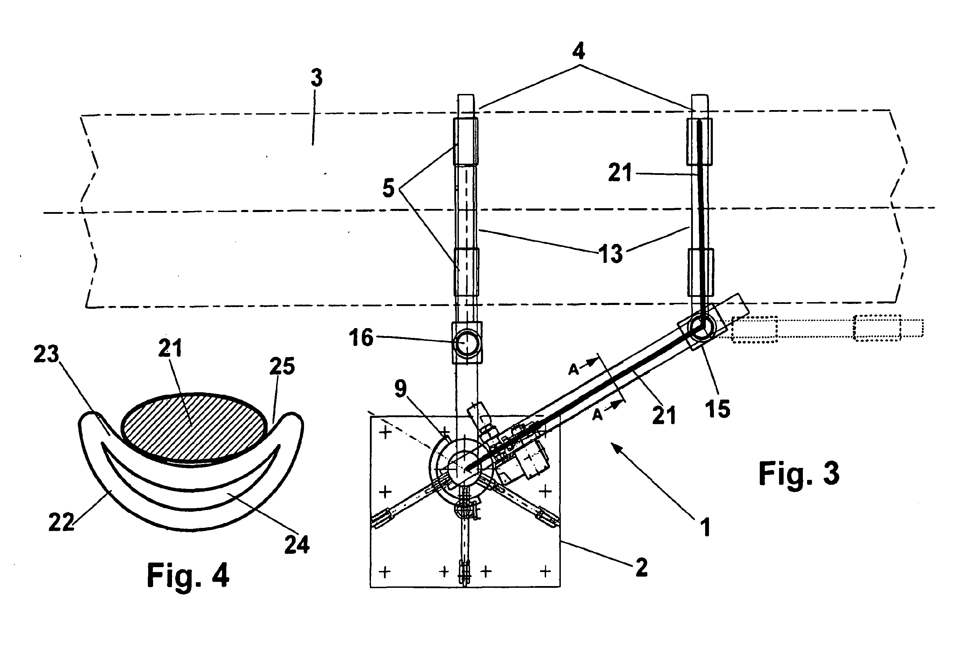

Wie in den Fig. 2 und 3 durch die fette Linie schematisch gezeigt, nimmt der Gelenkarm 3 und in Weiterführung auch der Ausleger 4 gleichzeitig die Betriebsmittel- und gegebenenfalls Kühlwasserzufuhr sowie Versorgungsleitungen und Steuerkabel als flexible Sammelleitung 21 auf.

Bei der schematisch dargestellten Ausführungsform der Strangbrennschneidmaschine 1 gemäß Fig. 3 gleitet der Hubwagen 15 lediglich auf dem Gelenkarm 13 und nicht auf dem Ausleger 4. Entsprechend dem Grad des Verschwenkens des Gelenkarms 13 gleitet somit der Hubwagen 15 auf diesem vor oder zurück. Auch bei dieser Variante wird der Ausleger 4 während des Brennschneidens NC-gesteuert stets im rechten Winkel zur Längsrichtung des Gießstranges 3 ausgerichtet. In den Fig. 3 ist auch durch die punktierten Linien dargestellt, dass der Ausleger 4 mittels des Gelenkarms 13 nach außerhalb des Gießstranges 3 geschwenkt werden kann, beispielsweise zu Wartungs- und Reparaturzwecken. Das Ausschwenken des Auslegers 4 kann durch den Gelenkarm 13 und/oder die drehbare Säule 9 erfolgen.

Fig. 4 zeigt einen Querschnitt durch den Gelenkarm 13 entlang der Linie A-A gemäß Fig. 3. Der Gelenkarm 13 besteht aus zwei halben ineinander gelegten und verschweißten Rohren 22 und 23. Der mondsichelförmige Hohlraum 24 dient als Kühlwasserraum zur Aufnahme und Leitung von Kühlwasser für den mit Kühlwasser durchflossenen Ausleger 4. Der darüber liegende halbkreisförmige Freiraum 25 hingegen dient zur Aufnahme der Sammelleitung 21.

### Liste der Bezugszeichen

- 1: Strangbrennschneidmaschine
- 2: Kranturm
- 3: Gießstrang
- 4: Ausleger
- 5: Brennerwagen
- 6: Schneidbrenner
- 7: Kantentaster
- 8: Aufsetzkufe
- 9: Säule
- 10: Hubkolbenzylinder
- 11: Elektrostation
- 12: Gasstation
- 13: Gelenkarm
- 14: Drehantrieb
- 15: Hubwagen
- 16: Drehlager
- 17: Hubwagenantrieb
- 18: Zahnstange
- 19: Zahnrad
- 20: Räder
- 21: Sammelleitung
- 22: Halbrohr
- 23: Halbrohr
- 24: Hohlraum
- 25: Freiraum
- 34: Sinterkanal

## Patentansprüche

1. Strangbrennschneidmaschine (1) zum Brennschneiden von gegossenen kalten und heißen Knüppeln, Blöcken und Brammen aus Stahl in und nach Stahlstranggießanlagen mit einem Kranturm (2) und einem quer zur horizontalen Gießstrangrichtung ausgerichteten Ausleger (4), auf dem ein oder zwei Brennerwagen (5) mit Schneidbrennern (6) quer zum Gießstrang (3) verfahrbar sind, **dadurch gekennzeichnet**, die Strangbrennschneidmaschine (1) eine Numerical Control (NC) Steuerung aufweist, und dass der Kranturm (2) ortsfest neben dem Gießstrang (3) angeordnet ist und einen in einem bestimmton Winkelbereich horizontal verschwenkbaren Gelenkarm (13) aufweist, an dem horizontal durch ein Drehlager (16) drehbar der Ausleger (4) angelenkt ist, wobei der Ausleger (4) mit einem entlang des Gelenkarms (13) und/oder des Auslegers (4) verfahrbaren Hubwagen (15) mit dem Drehlager (16) verbunden ist, um welches der Ausleger (4) derart drehbar ist, dass der Ausleger (4) gemeinsam mit dem Hubwagen (15) und dem Drehlager (16) während des Brennschneidens (NC) Numerical Control gesteuert stets im rechten Winkel zur Gießstrangrichtung ausgerichtet ist und der Gelenkarm (13) gleichzeitig die Betriebsmittel- und gegebenenfalls Kühlwasserzufuhr sowie Versorgungsleitungen und Steuerkabel als Sammelleitung (21) aufnimmt.

2. Strangbrennschneidmaschine nach Anspruch 1, **dadurch gekennzeichnet, dass** der Gelenkarm (13) in einem Winkel von mindestens 90° über den Gießstrang (3) verschwenkbar ist.

3. Strangbrennschneidmaschine nach Anspruch 1, **dadurch gekennzeichnet, dass** der Ausleger (4) zu Reparatur- und Wartungszwecken nach außerhalb des Gießstranges (3) verschwenkbar ist.

4. Strangbrennschneidmaschine nach Anspruch 1, **dadurch gekennzeichnet, dass** der Hubwagen (15) vorzugsweise auf Rädern (20) auf der Oberseite des Gelenkarms (13) bzw. des Auslegers (4) verfahrbar ist.

5. Strangbrennschneidmaschine nach Anspruch 1, **dadurch gekennzeichnet, dass** der Kranturm (2) eine vertikale Säule (9) aufweist, an welcher der Gelenkarm (13) drehbeweglich angelenkt und die Säule (9) mit Seil, Kette, Zahnstange, Hubkolbenzylinder (10) oder dergleichen zum Heben und Senken des Auslegers (4) höhenverstellbar ausgebildet ist.

6. Strangbrennschneidmaschine nach Anspruch 5, **dadurch gekennzeichnet, dass** die Säule (9) des Kranturms (2) drehbar ausgebildet ist.

7. Strangbrennschneidmaschine nach Anspruch 1, **dadurch gekennzeichnet, dass** die zum Brennschneiden erforderlichen Elemente, wie Schneidbrenner (6), motorischer Schneidantrieb mit Getriebe und Elektromotor, eine Halterung für die Sammelleitung (21), sowie Gassteuerungsteile, wie Ventile, Messgeräte sowie Kantentaster (7) und Wegbegrenzungsschalter am Ausleger (4) angeordnet sind.

8. Strangbrennschneidmaschine nach Anspruch 1, **dadurch gekennzeichnet, dass** der Ausleger (4) mit einer Wärmeisolierung und Aufsetzkufen (8) für den Gießstrang (3) versehen ist.

9. Strangbrennschneidmaschine nach Anspruch 8, **dadurch gekennzeichnet, dass** der Ausleger (4) zur Wärmerisolierung aus einer Kühlwasser durchflossenen, rahmenartigen Fachwerkkonstruktion besteht.

10. Strangbrennschneidmaschine nach Anspruch 1, **dadurch gekennzeichnet, dass** am Kranturm (2) im Wesentlichen ein Drehantrieb (14), Hubantrieb (17), Elektrostation (11), Gasstation (12) und gegebenenfalls weitere Steuermittel angeordnet sind.

11. Strangbrennschneidmaschine nach Anspruch 1, **dadurch gekennzeichnet, dass** der Gelenkarm (13) aus zwei halben ineinander gelegten und verschweißten Rohren (22,23) besteht, deren mondsichelförmiger Hohlraum (24) als Kühlwasserraum und der darüber liegende halbkreisförmige Freiraum (25) zur Aufnahme der Sammelleitung (21) dienen.

## Claims

1. An oxygen strand cutting machine (1) for flame-cutting cast cold and hot slugs, steel blocks and slabs in and after continuous steel casting units with a crane tower (2) and a boom (4) erected perpendicular to the horizontal continuous casting direction, whereon one or two torch carriages (5) with flame cutters (6) are mobile perpendicular to the cast strand (3), **characterised in that** the strand cutting machine (1) has a Numerical Control (NC) device, and the crane tower (2) is fixed permanently to the cast strand (3) and exhibits an articulated arm (13) pivoting horizontally in a set angular sector, on which the boom (4) is mounted horizontal rotatably by a roller bearing (16), wherein the boom (4) is connected to a lifting carriage (15) mobile along the articulating arm (13) and/or the boom (4) and fitted with the roller bearing (16), around which the boom (4) may pivot in such a way that the boom (4) together with the lifting carriage (15) and the roller bearing (16) are Numerical Control (NC) controlled always arranged perpendicular to the continuous casting direction during flame cutting and that the articulated arm (13) houses simultaneously the driving means and possibly the cooling water supply as well as the power and control cables as a common line (21).

2. An oxygen strand cutting machine according to claim 1, **characterised in that** the articulated arm (13) can sweep over an angle of at least 90° over the cast strand (3).

3. An oxygen strand cutting machine according to claim 1, **characterised in that** the boom (4) is retractable towards the outside of the cast strand (3) for repairing or maintenance purposes.

4. An oxygen strand cutting machine according to claim 1, **characterised in that** the lifting carriage (15) is mobile preferably on wheels (20) on the upper side of the articulated arm (13) resp. of the boom (4).

5. An oxygen strand cutting machine according to claim 1, **characterised in that** the crane tower (2) exhibits a vertical column (9), on which the articulated arm (13) is formed rotatably and the column (9) with cable, chain, toothed rack, lifting piston cylinder (10) or similar for lifting and lowering the boom (4) is provided adjustable in height.

6. An oxygen strand cutting machine according to claim 5, **characterised in that** the column (9) of the crane tower (2) is provided rotatably.

7. An oxygen strand cutting machine according to claim 1, **characterised in that** elements necessary to flame-cutting such as flame cutters (6), motorised cutting driving mechanism with transmission and electric motor, a bracket for the common line (21), as well as gas control parts, like valves, measuring instruments as well as edge sensors (7) and limit switches are arranged on the boom (4).

8. An oxygen strand cutting machine according to claim 1, **characterised in that** the boom (4) is fitted with a thermal insulation and slip-on rockers (8) for the cast strand (3).

9. An oxygen strand cutting machine according to claim 8, **characterised in that** the boom (4) consists of an open-ended lattice-type construction in the form of a frame, filled with cooling water for thermal insulation.

10. An oxygen strand cutting machine according to claim 1, **characterised in that** a rotary drive mechanism (14), a lifting mechanism (17), an electrical station (11), a gas station (12) and possibly further control members are arranged substantially on the crane tower (2).

11. An oxygen strand cutting machine according to claim 1, **characterised in that** the articulated arm (13) consists of two semi-tubes (22, 23) nested into one another and welded, whose cavity (24) in the form of a moon-crescent serves as a cooling water chamber and the superimposed semi-circular free space (25) for accommodating the common line (21).

## Revendications

1. Machine d'oxycoupage de barres (1) pour le découpage au chalumeau de billettes, lingots et brames en acier coulés, à l'état froid et chaud, à l'intérieur et à la suite d'installations de coulée continue d'acier, comprenant une tour de grue (2) et une flèche (4) qui est orientée transversalement à la direction horizontale de la barre de coulée et sur laquelle un ou deux chariots d'oxycoupage (5) comprenant des chalumeaux oxycoupeurs (6) sont déplaçables transversalement à la barre de coulée (3), caractériseé par le fait que ladite machine d'oxycoupage de barres (1) présente une commande numérique (CN) et que ladite tour de grue (2) est disposée de façon stationnaire à côté de la barre de coulée (3) et présente un bras d'articulation (13) qui est apte à pivoter horizontalement dans une plage d'angle déterminée et sur lequel est articulée ladite flèche (4) par un coussinet de pivotement (16) de manière à pouvoir tourner horizontalement, ladite flèche (4) étant reliée par un chariot élévateur (15) déplaçable le long du bras d'articulation (13) et/ou de la flèche (4), audit coussinet de pivotement (16) autour duquel ladite flèche (4) peut tourner de telle façon que, durant l'oxycoupage, elle est orientée par commande numérique toujours à angle droit par rapport à la direction de la barre de coulée, et que, en même temps, le bras d'articulation (13) reçoit, sous forme d'une conduite collectrice (21), l'amenée d'agent de service et, le cas échéant, d'eau de refroidissement ainsi que les lignes d'alimentation et les câbles de commande.

2. Machine d'oxycoupage de barres selon la revendication 1, **caractérisée par le fait que** ledit bras d'articulation (13) peut être pivoté sur la barre de coulée (3) dans un angle d'au moins 90°.

3. Machine d'oxycoupage de barres selon la revendication 1, **caractérisée par le fait que**, à des fins de réparation et d'entretien, ladite flèche (4) peut être pivotée vers l'extérieur de la barre de coulée (3).

4. Machine d'oxycoupage de barres selon la revendication 1, **caractérisée par le fait que** ledit chariot élévateur (15) est déplaçable de préférence sur roues (20) sur la face supérieure du bras d'articulation (13) ou bien de la flèche (4).

5. Machine d'oxycoupage de barres selon la revendication 1, **caractérisée par le fait que** ladite tour de grue (2) comprend une colonne verticale (9) sur laquelle le bras d'articulation (13) est articulé de façon mobile en rotation et que ladite colonne (9) est réalisé, au moyen d'un câble, d'une chaîne, d'une crémaillère, d'un cylindre à piston alternatif (10) ou semblable, de manière à être réglable en hauteur pour élever et abaisser la flèche (4).

6. Machine d'oxycoupage de barres selon la revendication 5, **caractérisée par le fait que** ladite colonne (9) de la tour de grue (2) est réalisée de manière à pouvoir tourner.

7. Machine d'oxycoupage de barres selon la revendication 1, **caractérisée par le fait que** les éléments nécessaires à l'oxycoupage, tels que les chalumeaux oxycoupeurs (6), le mécanisme d'entraînement par moteur avec engrenage et moteur électrique, un support pour ladite conduite collectrice (21), ainsi que des éléments de commande de gaz, tels que des soupapes, des appareils de mesure, ainsi que des palpeurs d'arête (7) et des interrupteurs de limitation de course sont disposés sur ladite flèche (4).

8. Machine d'oxycoupage de barres selon la revendication 1, **caractérisée par le fait que** la flèche (4) est pourvue d'une isolation thermique et de patins d'appui (8) pour la barre de coulée (3).

9. Machine d'oxycoupage de barres selon la revendication 8, **caractérisée par le fait que**, en vue de l'isolation thermique, ladite flèche (4) est constituée par une construction en charpente de type bâti à travers laquelle circule de l'eau de refroidissement.

10. Machine d'oxycoupage de barres selon la revendication 1, **caractérisée par le fait que** sur ladite tour de grue (2) sont disposés, pour l'essentiel, un mécanisme d'entraînement rotatif (14), un mécanisme d'entraînement élévateur (17), une station électrique (11), une station à gaz (12) ainsi que, le cas échéant, d'autres moyens de commande.

11. Machine d'oxycoupage de barres selon la revendication 1, **caractérisée par le fait que** ledit bras d'articulation (13) est constitué par deux demi-tubes (22, 23) placés l'un dans l'autre et soudés entre eux dont l'espace creux en croissant (24) sert d'espace pour l'eau de refroidissement et dont l'espace libre en demi-cercle (25) qui est situé là-dessus sert à recevoir ladite conduite collectrice (21).
